# EUROPEAN PATENT APPLICATION

(11) **EP 4 807 689 A1**
(43) Date of publication of application: **16.09.2026**
(21) Application number: 24892805.3
(22) Date of filing: 28.06.2024
(51) Int. Cl.: G06V 10/764

(54) **AI MODEL REUSE METHOD AND APPARATUS**

(30) Priority: 24.11.2023 CN 202311594582
(71) Applicant: Huawei Technologies Co., Ltd., Shenzhen, Guangdong 518129 (CN)
(72) Inventor: ZHANG, Yikai, Nanjing, Jiangsu 210093 (CN); ZHANG, Jiajin, Shenzhen, Guangdong 518129 (CN); CHEN, Chen, Shenzhen, Guangdong 518129 (CN)
(74) Representative: Maiwald GmbH
(86) International application number: PCT/CN2024/102579
(87) International publication number: WO 2025/107640

(57) **Abstract**

An AI model reuse method and an apparatus are provided, and relate to the field of artificial intelligence technologies, to improve model reuse effect. The method includes: processing each piece of sample data in a target training dataset by using a first AI model as an initial model of a target task, where the first AI model is an AI model obtained through training based on a source training dataset of a source task; determining, based on a processing result of each piece of sample data in the target training dataset, a category mapping cost at which a category of the target task is mapped to a category of the source task; determining, based on the category mapping cost, a model reuse weight from the first AI model to a second AI model used to process the target task; and obtaining the second AI model based on the reuse weight and the target training dataset.

## Description

This application claims priority to Chinese Patent Application No. 202311594582.6, filed with the China National Intellectual Property Administration on November 24, 2023 and entitled "AI MODEL REUSE METHOD AND APPARATUS", which is incorporated herein by reference in its entirety.

### TECHNICAL FIELD

This application relates to the field of artificial intelligence technologies, and in particular, to an AI model reuse method and an apparatus.

### BACKGROUND

In recent years, artificial intelligence (artificial intelligence, AI) technologies are increasingly widely applied, and how to obtain a good AI model is crucial.

Currently, many enterprises and research centers build large-scale model libraries. The model library includes a large quantity of pre-trained models, and the pre-trained models are AI models obtained through training based on previous tasks (including general tasks and specific tasks). For a new task, the pre-trained model in the model library may be reused to obtain an AI model used for the new task. In other words, the pre-trained model in the model library is used as an initial model of the new task, and the initial model is optimized to obtain the AI model applicable to the new task.

In some existing AI model reuse methods, processing effect of an AI model obtained based on a pre-trained model is low. In other words, the existing AI model reuse method has a problem of poor model reuse effect.

### SUMMARY

This application provides an AI model reuse method and an apparatus, to improve model reuse effect.

The following technical solutions are used in this application.

According to a first aspect, this application provides an AI model reuse method, including: processing each piece of sample data in a target training dataset by using a first AI model as an initial model of a target task, where the first AI model is an AI model obtained through training based on a source training dataset of a source task; determining, based on a processing result of each piece of sample data in the target training dataset, a category mapping cost at which a category of the target task is mapped to a category of the source task; determining, based on the category mapping cost, a model reuse weight from the first AI model to a second AI model used to process the target task; and obtaining the second AI model based on the model reuse weight and the target training dataset.

According to the AI model reuse method provided in this application, the category mapping cost between the category of the source task and the category of the target task can reflect reusability between a source model (namely, the first AI model) used to process the source task and a target model (namely, the second AI model) used to process the target task. Therefore, the category mapping cost is used as a consideration factor for model reuse, so that a feature of a pre-trained model can be better reused in a model training process, to obtain a target model with good processing effect. In other words, the method can improve model reuse effect.

Further, model reuse is performed based on the category mapping cost, so that the model training process can be guided to converge more quickly, and computational power overheads and time overheads can be reduced to some extent.

In a possible implementation, obtaining the second AI model based on the model reuse weight and the target training dataset specifically includes: determining a model loss based on the model reuse weight and the target training dataset; and updating a parameter of the first AI model based on the model loss, to obtain the second AI model.

In a possible implementation, determining, based on the processing result of each piece of sample data in the target training dataset, the category mapping cost at which the category of the target task is mapped to the category of the source task specifically includes: determining, based on category confidence of an object in each piece of sample data in the processing result, detection precision at which the category of the target task is detected as the category of the source task; and determining, based on the detection precision, the category mapping cost at which the category of the target task is mapped to the category of the source task. The detection precision is positively correlated with the category confidence. In other words, higher category confidence indicates higher detection precision.

In a possible implementation, the category mapping cost at which the category of the target task is mapped to the category of the source task is negatively correlated with the detection precision at which the category of the target task is detected as the category of the source task. In other words, higher detection precision at which the category of the target task is detected as the category of the source task indicates a lower category mapping cost at which the category of the target task is mapped to the category of the source task.

In a possible implementation, the category mapping cost at which the category of the target task is mapped to the category of the source task satisfies: $C = \left[\begin{matrix}{c}_{11} & … & {c}_{1 j} & … & {c}_{1 {d}_{2}} \\ … & … & … & … & … \\ {c}_{i 1} & … & {c}_{ij} & … & {c}_{3 {d}_{2}} \\ … & … & … & … & … \\ {c}_{{d}_{1} 1} & … & {c}_{{d}_{1} j} & … & {c}_{{d}_{1} {d}_{2}}\end{matrix}\right] ,$ where
C indicates the category mapping cost, the category mapping cost is a matrix of a size *d*₁× *d*₂, *d*₁ indicates a quantity of categories of the source task (a quantity of detection categories included in the source task), and *d*₂ indicates a quantity of categories of the target task (namely, a quantity of detection categories included in the target task). *cᵢⱼ* indicates a mapping cost at which a category *j* of the target task is mapped to a category *i* of the source task, *i* = 1, 2, ......, *d*₁, and *j* = 1, 2,*......, d*₂.

In a possible implementation, the model reuse weight is: $W = \left[\begin{matrix}{w}_{11} & … & {w}_{1 j} & … & {w}_{1 {d}_{2}} \\ … & … & … & … & … \\ {w}_{i 1} & … & {w}_{ij} & … & {w}_{3 {d}_{2}} \\ … & … & … & … & … \\ {w}_{{d}_{1} 1} & … & {w}_{{d}_{1} j} & … & {w}_{{d}_{1} {d}_{2}}\end{matrix}\right] ,$ where
*d*₁ indicates a quantity of categories of the source task, namely, a quantity of detection categories included in the source task, *d*₂ indicates a quantity of categories of the target task, namely, a quantity of detection categories included in the target task, *i* = 1, *2*, ......, *d*₁*, j* = 1, 2, ......, *d*₂*,* and *wᵢⱼ* indicates a model reuse weight that is from the first AI model to the second AI model and at which a category *j* of the target task is detected as a category *i* of the source task; and
the model reuse weight W satisfies: $min {\sum }_{i = 1 , j = 1}^{{d}_{1} , {d}_{2}} {c}_{ij} {w}_{ij} ,$ where $s . t . W \times 1 = p , 1 \times W = q$
*cᵢⱼ* indicates a category mapping cost at which the category *j* of the target task is mapped to the category *i* of the source task, **p** indicates a probability distribution of importance of sample data to which each category of object belongs in the source training dataset, and **q** indicates a probability distribution of importance of expected detection precision that is for each category of the target task and that is obtained by using the second AI model.

In this application, a process of reusing the first AI model of the source task to the target task is actually searching for a transmission solution with a minimum overall transmission cost (namely, a minimum mapping cost) from one distribution to the other distribution. The transmission solution is the model reuse weight (W). A meaning of the constraint condition W×**1** = **p** is as follows: A detection capability of the first AI model for each category of the source task continues to be used in the second AI model. In other words, knowledge that is learned from the first AI model and that is used to detect each category is migrated to the second AI model to a maximum extent based on a source distribution. A meaning of the constraint condition **1**×W=**q** is as follows: After the first AI model is reused to the second AI model, detection effect of the second AI model on each category of the target task is as the same as possible, that is, the second AI model is expected to reach a level as good as possible in each category of the target task.

In a possible implementation, determining the model loss based on the model reuse weight and the target training dataset specifically includes: mapping first-category confidence of the object to second-category confidence of the object based on the model reuse weight, where the first-category confidence of the object is obtained by processing the sample data in the target training dataset by using the first AI model; and determining the model loss based on the second-category confidence.

The model loss may be a value of a category loss function (namely, a category loss value) determined based on the second-category confidence of the object and real category confidence of the object. In other words, the model loss is the category loss value.

Optionally, in an object detection scenario, the processing result of the sample data includes the category confidence of the object and location information of the object in the sample data. The location information of the object may be coordinate information used to mark a detection box of the object. In this case, the model loss may be a sum of a category loss and a location loss, and the location loss is a value of a location loss function (namely, a location loss value) determined based on predicted location information of the object and real location information of the object in the sample data.

In a possible implementation, the probability distribution of the importance of the expected detection precision that is for each category of the target task and that is obtained by using the second AI model is a uniform distribution, so that the second AI model can reach the level as good as possible in each category of the target task.

In a possible implementation, the AI model reuse method provided in this application further includes: determining reuse precision of the first AI model, where the reuse precision of the first AI model is used to determine whether to use the first AI model as the initial model of the target task, and the reuse precision of the first AI model is the detection precision at which the category of the target task is detected as the category of the source task when the target training dataset is processed by using the first AI model.

When the detection precision of the first AI model is greater than a precision threshold, the first AI model is used as the initial model of the second AI model. When the detection precision of the first AI model is less than or equal to the precision threshold, the first AI model is not used as the initial model of the second AI model, and another model (for example, a randomly initial model) may be selected as the initial model of the second AI model. The initial model of the second AI model is determined based on the detection precision. This helps obtain the second AI model with better performance.

According to a second aspect, this application provides a compute device. The compute device includes modules configured to implement the method according to the first aspect and one of the possible implementations of the first aspect, for example, a processing module, a first determining module, and a second determining module.

The compute device has a function of implementing behavior in the method instance according to the first aspect and any one of the possible implementations of the first aspect. The function may be implemented by hardware, or may be implemented by hardware executing corresponding software. The hardware or the software includes one or more modules corresponding to the function.

According to a third aspect, an embodiment of this application provides a compute device, including a memory and at least one processor connected to the memory. The memory is configured to store computer program code, the computer program code includes computer instructions, and when the computer instructions are executed by the at least one processor, the processor is enabled to perform the method according to the first aspect and any one of the possible implementations of the first aspect.

According to a fourth aspect, an embodiment of this application provides a computer-readable storage medium, storing computer instructions. When the computer instructions are run on a computer, the method according to the first aspect and any one of the possible implementations of the first aspect is performed.

According to a fifth aspect, an embodiment of this application provides a computer program product. The computer program product includes computer instructions, and when the computer instructions are run on a computer, the method according to the first aspect and any one of the possible implementations of the first aspect is performed.

According to a sixth aspect, an embodiment of this application provides a chip or a chip system, including a processor, a memory, and an interface. The processor is configured to: read, through the interface, computer instructions stored in the memory, and run the computer instructions to perform the method according to the first aspect and any one of the possible implementations of the first aspect.

It should be understood that, for technical effect achieved by the technical solutions in the second aspect to the sixth aspect and the corresponding possible implementations in this application, refer to the foregoing technical effect of the first aspect and the corresponding possible implementations. Details are not described herein again.

### BRIEF DESCRIPTION OF DRAWINGS

FIG. 1 is a diagram of a reuse principle of a model according to an embodiment of this application;
FIG. 2 is a diagram of hardware of a compute device according to an embodiment of this application;
FIG. 3 is a schematic flowchart 1 of a model reuse method according to an embodiment of this application;
FIG. 4 is a schematic flowchart 2 of a model reuse method according to an embodiment of this application;
FIG. 5 is a schematic flowchart 3 of a model reuse method according to an embodiment of this application;
FIG. 6 is a schematic flowchart 4 of a model reuse method according to an embodiment of this application;
FIG. 7 is a schematic flowchart 5 of a model reuse method according to an embodiment of this application;
FIG. 8A and FIG. 8B are a schematic flowchart 6 of a model reuse method according to an embodiment of this application;
FIG. 9 is a diagram 1 of a structure of a compute device according to an embodiment of this application; and
FIG. 10 is a diagram 2 of a structure of a compute device according to an embodiment of this application.

### DESCRIPTION OF EMBODIMENTS

A term "and/or" in this specification merely describes an association relationship between associated objects, and indicates that three relationships may exist. For example, A and/or B may indicate the following three cases: Only A exists, both A and B exist, and only B exists.

In the specification and the claims in embodiments of this application, terms "first", "second", and the like are intended to distinguish between different objects, but do not indicate a specific sequence of the objects. For example, a first AI model and a second AI model are intended to distinguish between different AI models, but do not indicate a specific sequence of the AI models.

In embodiments of this application, a word "example", "for example", or the like indicates giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiment of this application, unless otherwise stated, "a plurality of" means two or more.

Embodiments of this application relate to AI model reuse. In the field of artificial intelligence technologies, an AI model is a mathematical model built to implement a function (for example, object detection, image processing, or natural language processing). The AI model has a complex structure and a large quantity of parameters. Usually, training an AI model requires a large quantity of training samples, and training the AI model requires high resource overheads and long time. Currently, a model library is built (that is, some pre-trained models are built as the model library), the AI model in the model library is used as an initial model of another subsequent task, and a target model is obtained based on the initial model, namely, model reuse. Specifically, the model reuse means that the AI model in the model library is used as the pre-trained model. Subsequently, for a new task, knowledge learned from the pre-trained model is migrated, based on a training dataset of the new task and the pre-trained model, to a target model that can be used for the new task, and a model reuse technology can significantly improve efficiency of model development and deployment.

The model reuse technology can be applied to fields such as an autonomous driving system, medical diagnosis, financial risk management, natural language processing, and image recognition. For example, the model reuse technology can be applied to compute service units and production application centers. The pre-trained model is used, so that a high-performance model can be quickly generated. In these applications, knowledge and capabilities of existing models can be reused and migrated to new tasks or fields. This greatly reduces workload of model retraining, makes adaptation to new environments and tasks more quickly, and improves system performance and accuracy, thereby providing high-quality services and decision-making.

In the compute service unit, the model reuse technology can use rich knowledge and representation capabilities of the pre-trained model to reduce time and resource costs of training the model from scratch, improve utilization of compute resources, and provide customized compute services for clients. The production application center can use the model reuse technology to quickly add new functions and provide more accurate and personalized services.

An AI model reuse method provided in embodiments of this application may be used in a scenario related to category detection, for example, an object detection (object detection) scenario, a category recognition scenario, or a classification scenario.

The object detection is a critical and booming research branch in the field of computer vision. An object detection technology can efficiently recognize a plurality of objects in an image, and can accurately locate locations of the plurality of objects in the image, so that a computer vision model can understand the image more deeply. The object detection is successfully applied to various production and life scenarios in the industrial and civil fields. For example, in logistics and warehousing, product defects can be automatically detected through object detection; and in applications such as facial recognition and autonomous driving, a location of a target object can be tracked in real time through object detection.

In recent years, many enterprises and research centers build large-scale object detection model libraries. The object detection model library includes a large quantity of pre-trained models used to detect various categories of objects, and the pre-trained models are models obtained through training based on previous detection tasks (including general tasks and specific tasks).

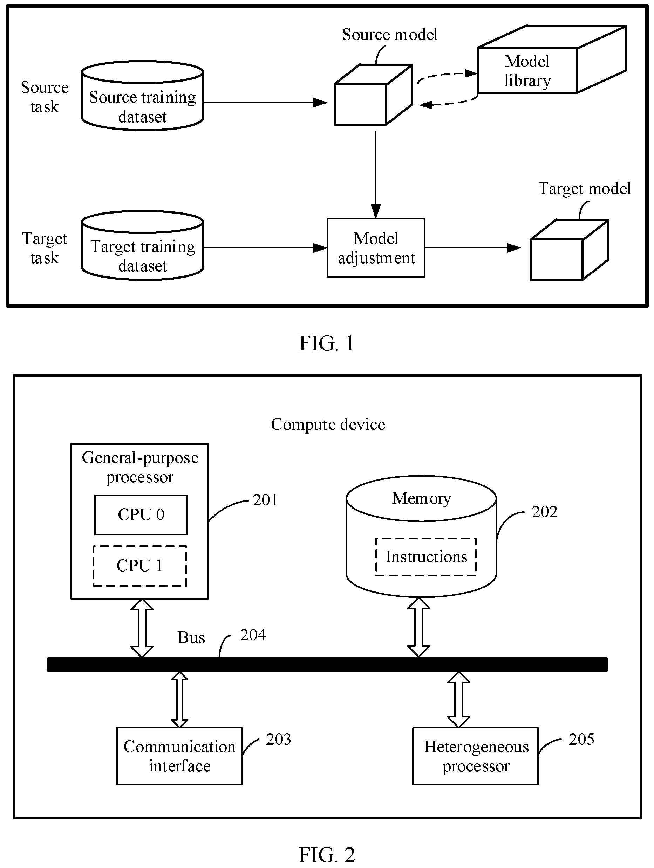

Refer to FIG. 1. For a new detection task (briefly referred to as a target task), an appropriate pre-trained model (referred to as a source model) may be selected from an object detection model library. The pre-trained model is a detection model obtained through training based on a source task by using a source training dataset. Further, the source model is fine-tuned by using a target training dataset, to obtain a target model that can process the target task.

The source task may also be referred to as an upstream task, and the target task may also be referred to as a downstream task. The source task and the target task may be tasks in a same field, or may be tasks in different fields. For example, the source task is item recognition on a shelf, the target task is food recognition on a shelf, and the source task and the target task belong to a same field. For another example, the source task is remote sensing image recognition, the target task is medical image recognition, and the source task and the target task belong to different fields.

The pre-trained model usually includes features of knowledge in a plurality of fields, and has a wide reusable capability, and the pre-trained model is used as an initial model of the target task. For the target task, a model parameter of the pre-trained model is a better optimization start point, which enables the downstream task to be converged within limited training time, improves training efficiency of the target model, and implements high universality and adaptability, thereby promoting efficient and accurate implementation of the object detection technology in various application scenarios.

Currently, a model reuse method is a transfer learning method. Transfer learning is to transfer knowledge obtained based on a source task to a target task. For a pre-trained model from the source task (which cannot access a source training dataset), the pre-trained model is trained by using a training dataset of the target task, to fine-tune all parameters of the pre-trained model, so as to obtain a target model. The method is the transfer learning method in which all the parameters are fine-tuned.

In the transfer method in which all the parameters are fine-tuned, sufficient labeled samples are required to fine-tune all the parameters. Therefore, overheads required for model training are high, and the overheads include compute resource overheads and time overheads. In this case, flexibility and scalability of model reuse in actual application are limited. In addition, the transfer method in which all the parameters are fine-tuned may have a problem of model overfitting caused by insufficient labeled samples, that is, detection effect of the model is poor.

Another model reuse method is knowledge distillation (knowledge distillation). The knowledge distillation is a technology of extracting knowledge from a deep model (a teacher model, namely, a source model) and transferring the knowledge to a shallow model (a student model, namely, a target model). In the knowledge distillation technology, a large quantity of hyperparameters need to be manually adjusted, and time overheads required for manually adjusting the large quantity of hyperparameters are high.

Still another model reuse method is a parameter efficient transfer learning method. In the method, knowledge transfer is implemented by minimizing a quantity of parameters in a target task, that is, only a small quantity of parameters in a source model are adjusted. In some cases, due to adjustment of only the small quantity of parameters in the source model, inherent knowledge of the source model cannot be changed, and potential deep semantic information cannot be explored. Consequently, processing effect of a target model is poor.

In conclusion, the three model reuse methods all have a problem of poor model reuse effect. For the problem, embodiments of this application provide an AI model reuse method. In a process of reusing a pre-trained model (source model), a category mapping cost at which a target task is mapped to a category of a source task is introduced, a model reuse weight from the source model to a target model is determined based on the category mapping cost, a model loss is determined based on the model reuse weight and a target training dataset, and a parameter of the source model is updated based on the model loss, to obtain the target model. In the method, the category mapping cost between the category of the source task and a category of the target task can reflect reusability between the source model used to process the source task and the target model used to process the target task. Therefore, the category mapping cost is used as a consideration factor for model reuse, so that a feature of the pre-trained model can be better reused in a model training process, to obtain a target model with good processing effect. In other words, the method can improve model reuse effect.

Further, model reuse is performed based on the category mapping cost, so that the model training process can be guided to converge more quickly, and computational power overheads and time overheads can be reduced to some extent.

The AI model reuse method provided in embodiments of this application may be performed by a compute device, for example, a server or a desktop computer. For example, FIG. 2 is a diagram of a hardware structure of a compute device according to an embodiment of this application. Various components shown in FIG. 2 may be implemented in hardware, software, or a combination of hardware and software including one or more signal processing and/or application-specific integrated circuits. As shown in FIG. 2, the compute device may include one or more processors (for example, a general-purpose processor 201 and a heterogeneous processor 205 shown in FIG. 2), a memory 202, and a communication interface 203. The general-purpose processor 201, the memory 202, the communication interface 203, and the heterogeneous processor 205 may be connected to each other through a bus 204, or may be connected to each other in another manner. Optionally, the various components included in the compute device may be implemented in the hardware, the software, or the combination of hardware and software that includes the one or more signal processing and/or application-specific integrated circuits.

The compute device may include the one or more general-purpose processors 201. The processor 201 is a control center of the compute device. The processor 201 may be a CPU, another general-purpose processor, or the like. The general-purpose processor may be a microprocessor, any conventional processor, or the like.

A controller in the general-purpose processor 201 is a nerve center and a command center of the compute device. The controller may generate an operation control signal based on an instruction operation code and a time sequence signal, to complete control of instruction fetching and instruction execution. Optionally, a memory may be further configured in the general-purpose processor 201, and is configured to store instructions and data. For example, the processor 201 may include one or more general-purpose central processing units (central processing unit, CPU), for example, a CPU 0 and a CPU 1 shown in FIG. 2.

The heterogeneous processor 205 is a heterogeneous processor relative to the general-purpose processor 201. The heterogeneous processor 205 may be, for example, a graphics processing unit (graphics processing unit, GPU), a field programmable gate array (field programmable gate array, FPGA), or an application-specific integrated circuit (application-specific integrated circuit, ASIC). The heterogeneous processor 205 may include one or more processing cores. Usually, the heterogeneous processor 205 includes a plurality of processing cores.

The memory 202 includes but is not limited to a random access memory (random access memory, RAM), a read-only memory (read-only memory, ROM), an erasable programmable read-only memory (erasable programmable read-only memory, EPROM), a flash memory, an optical memory, a magnetic disk storage medium, another magnetic storage device, or any other medium that can carry or store expected program code in a form of an instruction or a data structure and that can be accessed by a computer. In this embodiment of this application, the memory 202 may store information such as computer instructions.

In a possible implementation, the memory 202 may be independent of the processor (for example, the general-purpose processor 201 or the heterogeneous processor 205). The memory 202 may be connected to the processor through the bus 204, and is configured to store data, instructions, or program code. When invoking and executing the instructions or the program code stored in the memory 202, the processor can implement related steps in the method provided in embodiments of this application.

In another possible implementation, the memory 202 may alternatively be integrated with the processor.

The communication interface 203 may be a transceiver module, and is configured to communicate with another device or a communication network, for example, an ethernet, a RAN, or a wireless local area network (wireless local area network, WLAN). The communication interface 203 may receive instructions, a message, data, or the like. The transceiver module may be an apparatus, for example, a transceiver or a transceiver machine. Optionally, the communication interface 203 may alternatively be a transceiver circuit located inside the processor 201, and is configured to implement signal input and signal output of the processor. The communication interface 203 may be a wired interface (port), for example, a fiber distributed data interface (fiber distributed data interface, FDDI) or a gigabit ethernet (gigabit ethernet, GE) interface, or the communication interface 203 may be a wireless interface.

The general-purpose processor 201 (namely, the central processing unit CPU) is a general-purpose compute module, is mainly responsible for logic computing and logic control functions for load, and can efficiently process a single task with a complex computing sequence, but has low performance in terms of massive computing. Therefore, the general-purpose processor 201 may distribute a task involving massive computing (for example, an AI model training task) to the heterogeneous processor 205. After completing computing, the heterogeneous processor 205 returns a computational result to the general-purpose processor 201.

The bus 204 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. The bus may alternatively be classified into a serial bus or a parallel bus. For ease of indication, the bus is indicated by using only one thick line in FIG. 2, but this does not indicate that there is only one bus or one type of bus.

It should be noted that the compute device shown in FIG. 2 is merely an example of a compute device. The compute device may have more or fewer components than those shown in FIG. 2, or a combination of two or more components, or an arrangement of different components.

With reference to the foregoing content, in the AI model reuse method provided in embodiments of this application, a first AI model used to process a source task is reused, to obtain a second AI model used to process a target task. In the following embodiments, a training dataset used to obtain the first AI model through training is referred to as a source training dataset, and a training dataset used to obtain the second AI model through training is referred to as a target training dataset.

In embodiments of this application, the training dataset (including the source training dataset and the target training dataset) includes a plurality of pieces of sample data. Optionally, the sample data may be an image (the sample data may also be referred to as a sample image).

It should be noted that, in the model reuse method in embodiments of this application, based on the category mapping cost between the category of the target task and the category of the source task, the first AI model used to process the source task is reused to obtain the second AI model used to process the target task. Therefore, it can be learned that the source task and the target task relate to categories. Therefore, the AI model reuse method provided in embodiments of this application is mainly used in a scenario related to category detection. An object detection scenario is used as an example. In the following embodiment, the category of the source task is a detection category included in the source task, and the category of the target task is a detection category included in the target task. For example, if detection categories included in the source task are two categories of reptiles (a reptile of a category 1 and a reptile of a category 2), the category of the source task includes two categories: the category 1 and the category 2.

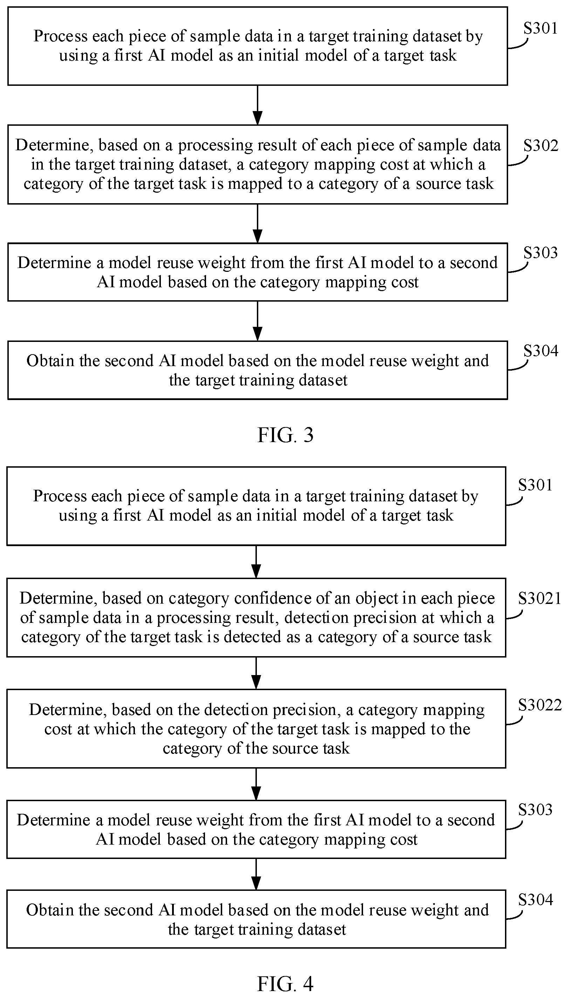

The following describes in detail the AI model reuse method provided in embodiments of this application. As shown in FIG. 3, the method includes S301 to S304.

S301: Process each piece of sample data in a target training dataset by using a first AI model as an initial model of a target task.

The first AI model is an AI model obtained through training based on a source training dataset of a source task, and the target training dataset is used to train a second AI model that processes the target task.

Optionally, the first AI model is from a model library. A user may select an appropriate pre-trained model from the model library based on a requirement of the target task, and use the pre-trained model as the first AI model. For example, if the target task is to detect a reptile, a model used for animal recognition may be selected from the model library as the pre-trained model of the target task. For another example, if the target task is to detect a sandwich and an ice cream, a model used to recognize a hamburger and bread may be selected from the model library as the pre-trained model of the target task.

It should be noted that both the first AI model and the second AI model may be single-object processing models, or may be multi-object processing models. A single object or a plurality of objects may be understood as that a category of an object that can be processed by using the AI model is one or more categories. For example, in an object detection scenario, the first AI model can detect two categories. For example, the first AI model can be used to detect an object of a category A1 and/or an object of a category B1 that are/is included in a to-be-detected image. The second AI model can detect three categories. For example, the second AI model can be used to detect at least one of an object of a category A2, an object of a category B2, or an object of a category C2 included in a to-be-detected image.

S302: Determine, based on a processing result of each piece of sample data in the target training dataset, a category mapping cost at which a category of the target task is mapped to a category of the source task.

In this embodiment of this application, all the sample data in the target training dataset is processed by using the first AI model, to obtain the processing result of each piece of sample data. The processing result of processing the sample data by using the AI model may include category confidence of an object in the sample data.

It should be understood that the category confidence of the object is confidence at which the object belongs to each category. Higher category confidence indicates higher trustworthiness at which the object belongs to the category, and a category with highest category confidence is determined as the category of the object. For example, categories that can be detected by the first AI model include a category A1 and a category B1. For a piece of sample data, category confidence in a processing result of the sample data includes confidence at which a category of an object is the category A1 and confidence at which the category of the object is the category B1. If the confidence of the category A1 is higher than the confidence of the category B1, it is determined that the category of the object in the sample data is the category A1.

Optionally, in an object detection scenario, the processing result of the sample data includes the category confidence of the object and location information of the object in the sample data.

The location information of the object may be coordinate information used to mark a detection box of the object. For example, if the detection box is a rectangular box, the location information of the object is coordinates of four vertices of the detection box.

In this embodiment of this application, the target training dataset is a training dataset corresponding to the target task. It is assumed that the category of the target task includes an object of a category A2, an object of a category B2, and an object of a category C2. In this case, the sample data in the target training dataset includes at least one of the object of the category A2, the object of the category B2, or the object of the category C2.

For the processing result of processing the sample data in the target training dataset by using the first AI model, that the category of the target task is mapped to the category of the source task may be understood as follows: A category in the sample data of the target task is recognized by the first AI model as a category of the source task. For example, an object in the sample data is actually a sandwich. After the sample data is input to the first AI model, if it is detected that the object is a hamburger (with highest confidence), a sandwich category of the target task is mapped to a hamburger category of the source task.

It should be understood that the category mapping cost is used to measure reusability between the first AI model and the second AI model, or may be understood as that the category mapping cost is used to measure a similarity between a category feature of the source task and a category feature of the target task. A higher category similarity indicates higher reusability.

With reference to FIG. 3, as shown in FIG. 4, in an implementation, S302 may be implemented through the following S3021 and S3022.

S3021: Determine, based on the category confidence of the object in each piece of sample data in the processing result, detection precision at which the category of the target task is detected as the category of the source task.

In this embodiment of this application, the detection precision is positively correlated with the category confidence. In other words, higher category confidence indicates higher detection precision.

In an implementation, the detection precision and the category confidence may satisfy a functional relationship y=f(x), where y indicates the detection precision, and x indicates the category confidence. For example, y=ax, and a>0.

S3022: Determine, based on the detection precision, the category mapping cost at which the category of the target task is mapped to the category of the source task.

In this embodiment of this application, the category mapping cost at which the category of the target task is mapped to the category of the source task is negatively correlated with the detection precision at which the category of the target task is detected as the category of the source task. In other words, higher detection precision at which the category of the target task is detected as the category of the source task indicates a lower category mapping cost at which the category of the target task is mapped to the category of the source task.

Based on the foregoing descriptions, the category mapping cost is determined based on detection precision at which each category of the target task is detected as a category of the source task when the target training dataset is processed by using the first AI model. Therefore, the category mapping cost is a matrix, and the category mapping cost may also be referred to as a cost matrix or an overhead matrix. In other words, the category mapping cost is reuse costs or reuse overheads of reusing the AI model used to process the source task to the AI model used to process the target task.

In some embodiments, the category mapping cost at which the category of the target task is mapped to the category of the source task satisfies: $C = \left[\begin{matrix}{c}_{11} & … & {c}_{1 j} & … & {c}_{1 {d}_{2}} \\ … & … & … & … & … \\ {c}_{i 1} & … & {c}_{ij} & … & {c}_{3 {d}_{2}} \\ … & … & … & … & … \\ {c}_{{d}_{1} 1} & … & {c}_{{d}_{1} j} & … & {c}_{{d}_{1} {d}_{2}}\end{matrix}\right]$

Herein, C indicates the category mapping cost, the category mapping cost is a matrix of a size *d*₁ × *d*₂, *d*₁ indicates a quantity of categories of the source task (a quantity of detection categories included in the source task), and *d*₂ indicates a quantity of categories of the target task (namely, a quantity of detection categories included in the target task). *cᵢⱼ* indicates a mapping cost at which a category *j* of the target task is mapped to a category *i* of the source task, *i* = 1,2, ......, *d*₁, and *j* = 1,2, ......, *d*₂*.*

A process of calculating the category mapping cost C is as follows:
Step 1: For each piece of sample data in the target training dataset, calculate detection precision at which the category *j* of the target task is detected as the category *i* of the source task when the sample data is processed by using the first AI model.

In an implementation, the detection precision at which the category *j* of the target task is detected as the category *i* of the source task may be AP (mean average precision).

The detection precision at which the category of the target task is detected as the category of the source task is a precision matrix AP below: $AP = \left[\begin{matrix}{a}_{11} & … & {a}_{1 j} & … & {a}_{1 {d}_{2}} \\ … & … & … & … & … \\ {a}_{i 1} & … & {a}_{ij} & … & {a}_{3 {d}_{2}} \\ … & … & … & … & … \\ {a}_{{d}_{1} 1} & … & {a}_{{d}_{1} j} & … & {a}_{{d}_{1} {d}_{2}}\end{matrix}\right]$

Herein, *aᵢⱼ* indicates the detection precision at which the category *j* of the target task is detected as the category *i* of the source task.

Step 2: Use a reciprocal of the detection precision as the category mapping cost at which the category *j* of the target task is mapped to the category *i* of the source task.

To be specific, ${c}_{ij} = \frac{1}{{a}_{ij}}$, in other words, $\frac{1}{{a}_{ij}}$ is used as a reuse overhead value from the *i*^{th} category of the source task to the *j*^{th} category of the target task, and is filled into the overhead matrix (namely, the category mapping cost matrix C).

In step 1, the detection precision at which the category *j* of the target task is detected as the category *i* of the source task is obtained through calculation based on the processing result of the sample data.

In the object detection scenario, each piece of sample data in the target training dataset is detected by using the first AI model, and a detection result (namely, the processing result) of each piece of sample data includes category confidence at which a detected object belongs to each category (the category of the source task) and location information (which may be referred to as a detection box or a prediction box) of the object.

Based on the descriptions of the category mapping cost, it can be learned that the higher detection precision *aᵢⱼ* at which the category *j* of the target task is mapped to the category *i* of the source task indicates the higher similarity between the category feature of the category *i* of the source task and the category feature of the category *j* of the target task, and the lower mapping cost *cᵢⱼ* at which the category *j* of the target task is mapped to the category *i* of the source task, that is, the lower reuse overheads between the first AI model and the second AI model.

The process of determining, based on the detection result of the sample data, the detection precision at which the category *j* of the target task is detected as the category *i* of the source task is as follows:
S1: Determine an intersection over union (intersection over union, IoU) between a prediction box and a real box of each object in each piece of sample data based on the detection result of each object in each piece of sample data.

The IoU indicates a degree of overlapping between the prediction box and the real box, and can be used to measure accuracy of the detection result.

An object in the sample data is used as an example. Based on detection results obtained by detecting the object as the categories of the source task, a detection box corresponding to a category of the source task with highest confidence in the detection results is compared with a real detection box of the object, to obtain an intersection over union.

For example, the categories of the source task include two categories (denoted as a category O₁ and a category O₂), and the categories of the target task include two categories (denoted as a category T₁ and a category T₂). For one piece of sample data (namely, one sample image), it is assumed that the sample data includes seven objects, and the seven objects include one or more objects of the category T₁ and one or more objects of the category T₂. For one of the objects, confidence of a detection result includes confidence at which the object is detected as the category O₁ and confidence at which the object is detected as the category O₂, and a category corresponding to larger confidence between the two pieces of confidence is determined as a predicted category of the object. Refer to Table 1 below. Table 1 shows a real category, a real box, a detection result (confidence and a prediction box), a predicted category, and an intersection over union between the prediction box and the real box of the object in the sample data.

**Table 1**

| Object in sample data | Real category of the object | Confidence in a detection result | Highest confidence | Predicted category | Prediction box | Real box | IoU |
|---|---|---|---|---|---|---|---|
| Object 1 | T₁ | Z₁₁ corresponding to a case in which the object 1 is detected as the category O₁, and confidence Z₁₂ corresponding to a case in which the object 1 is detected as the category O₂ | Z₁₁ | O₁ | M₁ | K₁ | IoU₁ |
| Object 2 | T₂ | Z₂₁ corresponding to a case in which the object 2 is detected as the category O₁, and confidence Z₂₂ corresponding to a case in which the object 2 is detected as the category O₂ | Z₂₂ | O₂ | M₂ | K₂ | IoU₂ |
| Object 3 | T₁ | Z₃₁ corresponding to a case in which the object 3 is detected as the category O₁, and confidence Z₃₂ corresponding to a case in which the object 3 is detected as the category O₂ | Z₃₁ | O₁ | M₃ | K₃ | IoU₃ |
| Object 4 | T₂ | Z₄₁ corresponding to a case in which the object 4 is detected as the category O₁, and confidence Z₄₂ corresponding to a case in which the object 4 is detected as the category O₂ | Z₄₁ | O₁ | M₄ | K₄ | IoU₄ |
| Object 5 | T₂ | Z₅₁ corresponding to a case in which the object 5 is detected as the category O₁, and confidence Z₅₂ corresponding to a case in which the object 5 is detected as the category O₂ | Z₅₂ | O₂ | M₅ | K₅ | IoU₅ |
| Object 6 | T₁ | Z₆₁ corresponding to a case in which the object 6 is detected as the category O₁, and confidence Z₆₂ corresponding to a case in which the object 6 is detected as the category O₂ | Z₆₂ | O₂ | M₆ | K₆ | IoU₆ |
| Object 7 | T₁ | Z₇₁ corresponding to a case in which the object 7 is detected as the category O₁, and confidence Z₇₂ corresponding to a case in which the object 7 is detected as the category O₂ | Z₇₁ | O₁ | M₇ | K₇ | IoU₇ |

With reference to Table 1, for example, for the object 1 in the sample data, the real category of the object is the category T₁, the real box is K₁, in the detection result, the confidence at which the object 1 is detected as the category O₁ is Z₁₁ and the confidence at which the object 1 is detected as the category O₂ is Z₁₂, and the highest confidence is Z₁₁. In this case, the predicted category of the object 1 is the category O₁, the corresponding prediction box is M₁, and the intersection over union between M₁ and K₁ is calculated as the IoU₁₁. It can be learned from Table 1 that, for the sample data, the IoUs obtained through calculation include the IoU₁, the IoU₂, the IoU₃, the IoU₄, the IoU₅, the IoU₆, and the IoU₇.

S2: Collect, based on IoUs corresponding to all objects of all samples in the target training dataset, statistics about detection precision at which categories of the target task are detected as categories of the source task.

The example shown in Table 1 is still used as an example to describe the process of calculating the detection precision.

First, based on the content in Table 1, statistics about the IoUs at which the categories of the target task are detected as the categories of the source task may be collected. For example, based on the detection results of the seven objects in the sample data, in the seven objects, three IoUs: the IoU₁, the IoU₃, and the IoU₇ are obtained when the category T₁ of the target task is detected as the category O₁ of the source task, one IoU: the IoU₆ is obtained when the category T₁ of the target task is detected as the category O₂ of the source task, one IoU: the IoU₄ is obtained when the category T₂ of the target task is detected as the category O₁ of the source task, and two IoUs: the IoU₂ and the IoU₅ are obtained when the category T₂ of the target task is detected as the category O₂ of the source task.

Similarly, for each piece of sample data in the target training dataset, a statistical result similar to that in Table 1 may be obtained. A difference lies in that a quantity of objects in other sample data may be different from a quantity of objects in the sample data shown in Table 1, and/or the other sample data includes one or two categories of objects.

Second, statistics about a quantity of each category of IoUs are collected for the target training dataset.

Still refer to the foregoing example. For the target training dataset, the statistical result of the IoUs includes four categories of IoUs: the IoU obtained when the category T₁ of the target task is detected as the category O₁ of the source task, the IoU obtained when the category T₁ of the target task is detected as the category O₂ of the source task, the IoU obtained when the category T₂ of the target task is detected as the category O₁ of the source task, and the IoU obtained when the category T₂ of the target task is detected as the category O₂ of the source task. It is assumed that the target training dataset includes N pieces of sample data. Optionally, quantities of four categories of IoUs obtained through statistics collection for the target training dataset may be denoted as a matrix U below. $U = \left[\begin{matrix}{IoU}_{11} & {IoU}_{12} & {IoU}_{13} & {IoU}_{14} \\ {IoU}_{21} & {IoU}_{22} & {IoU}_{23} & {IoU}_{24} \\ … & … & … & … \\ {IoU}_{N 1} & {IoU}_{N 5} & {IoU}_{N 3} & {IoU}_{N 4}\end{matrix}\right]$

For sample data 1, quantities of four categories of IoUs obtained through calculation are sequentially IoU₁₁, IoU₁₂, IoU₁₃, and IoU₁₄; for sample data 2, quantities of four categories of IoUs obtained through calculation are sequentially IoU₂₁, IoU₂₂, IoU₂₃, and IoU₂₄, and for sample data N, quantities of four categories of IoUs obtained through calculation are sequentially IoU_{N1}, IoU_{N2}, IoU_{N3}, and IoU_{N4}.

With reference to the matrix U, total quantities of the four categories of IoUs in the target training dataset are determined, and are denoted as IoU1, IoU2, IoU3, and IoU4. Details are as follows: $IoU 1 = {IoU}_{11} + {IoU}_{21} + … + {Ou}_{N 1} ;$ $IoU 2 = {IoU}_{11} + {IoU}_{21} + … + {Ou}_{N 1} ;$ $IoU 3 = {IoU}_{11} + {IoU}_{21} + … + {Ou}_{N 1} ;$ and $IoU 4 = {IoU}_{11} + {IoU}_{21} + … + {Ou}_{N 1} .$

Finally, the detection precision at which the category of the target task is detected as the category of the source task is determined based on a quantity of IoUs that exceed a preset threshold in the quantity of each category of IoUs.

After the total quantities of the four categories of IoUs in the target training dataset are obtained through statistics collection, the quantity of IoUs that exceed the preset threshold in each category of IoUs is determined based on the preset threshold (a threshold specified in an AP mechanism). It should be understood that an IoU exceeding the threshold indicates high detection accuracy. It is assumed that a quantity of IoUs that exceed the preset threshold in the IoU1 IoUs is denoted as n₁, a quantity of IoUs that exceed the preset threshold in the IoU2 IoUs is denoted as n₂, a quantity of IoUs that exceed the preset threshold in the IoU3 IoUs is denoted as n₃, a quantity of IoUs that exceed the preset threshold in the IoU4 IoUs is denoted as n₄, in all the sample data in the target training dataset, a quantity of objects that belong to the category T₁ is X, and a quantity of objects that belong to the category T₂ is Y. Because the category of the source task is 2, and the quantity of categories of the target task is also 2, the category mapping cost is a 2x2 matrix, for example, is denoted as a matrix AP: $AP = \left[\begin{matrix}{a}_{11} & {a}_{12} \\ {a}_{21} & {a}_{22}\end{matrix}\right]$

Herein, *a₁₁* indicates detection precision at which the category T₁ of the target task is detected as the category O₁ of the source task, and ${a}_{11} = \frac{{n}_{1}}{X}$; *a₁₂* indicates detection precision at which the category T₁ of the target task is detected as the category O₂ of the source task, and ${a}_{12} = \frac{{n}_{2}}{X}$; *a₂₁* indicates detection precision at which the category T₂ of the target task is detected as the category O₁ of the source task, and ${a}_{21} = \frac{{n}_{3}}{Y}$; and *a₂₂* indicates detection precision at which the category T₂ of the target task is detected as the category O₂ of the source task, and ${a}_{22} = \frac{{n}_{4}}{Y}$.

S303: Determine a model reuse weight from the first AI model to the second AI model based on the category mapping cost.

The second AI model is used to process the target task, and the model reuse weight is a weight at which a processing result of the first AI model is mapped to a processing result of the second AI model. The model reuse weight is a matrix. Therefore, the model reuse weight may also be referred to as a model transmission matrix from the first AI model to the second AI model, and the model transmission matrix may reflect a relationship between an output result of the first AI model and an output result of the second AI model for a same input. When the model reuse weight is learned of, an expected processing result of processing the sample data by using the second AI model may be determined based on the processing result of processing the sample data in the target training dataset by using the first AI model.

For example, one piece of sample data in the target training dataset is processed by using the first AI model, and a processing result of the sample data is output. To be specific, category confidence (highest category confidence) is *Z*₁, and a model reuse weight is W. In this case, category confidence *Z*₂ in an expected processing result of the sample data obtained by using the second AI model is: *Z*₂ = *Z*₁ × *W.*

The model reuse weight may be expressed as: $W = \left[\begin{matrix}{w}_{11} & … & {w}_{1 j} & … & {w}_{1 {d}_{2}} \\ … & … & … & … & … \\ {w}_{i 1} & … & {w}_{ij} & … & {w}_{3 {d}_{2}} \\ … & … & … & … & … \\ {w}_{{d}_{1} 1} & … & {w}_{{d}_{1} j} & … & {w}_{{d}_{1} {d}_{2}}\end{matrix}\right]$

Herein, *wᵢⱼ* indicates a model reuse weight that is from the first AI model to the second AI model and at which the category *j* of the target task is detected as the category *i* of the source task.

In this embodiment of this application, a process of reusing the first AI model of the source task to the target task is actually searching for a transmission solution with a minimum overall transmission cost (namely, a minimum mapping cost) from one distribution to the other distribution. The transmission solution is the model reuse weight (W). Based on the known category mapping cost (the category mapping cost C) from each category of the source task to each category of the target task, an overall mapping cost of reusing the first AI model to the second AI model may be expressed as: ${\sum }_{i = 1 , j = 1}^{{d}_{1} , {d}_{2}} {c}_{ij} {w}_{ij}$

The model reuse weight W that minimizes the overall category mapping cost satisfies Formula (1): $\begin{matrix}min {\sum }_{i = 1 , j = 1}^{{d}_{1} , {d}_{2}} {c}_{ij} {w}_{ij} \\ s . t . W \times 1 = p , 1 \times W = q\end{matrix}$

Herein, min ${\sum }_{i = 1 , j = 1}^{{d}_{1} , {d}_{2}} {c}_{ij} {w}_{ij}$ is a target optimization function, and W×**1** = **p** and **1**×W=**q** are constraint conditions.

In the constraint conditions, **p** indicates a probability distribution of importance of each category of sample data in the source training dataset, and **q** indicates a probability distribution of importance of expected detection precision that is for each category of the target task and that is obtained by using the second AI model.

Optionally, the probability distribution **p** of the importance of each category of sample data in the source training dataset is a proportion of an amount of each category of sample data in the source training dataset to a total amount of sample data in the source training dataset, and a probability value corresponding to each category in the probability distribution **p** reflects a detection capability of the first AI model for each category of the source task. The probability distribution **q** of the importance of the expected detection precision that is for each category of the target task and that is obtained by using the second AI model is a uniform distribution.

For example, it is assumed that the quantity of categories of the source task *d*₁=3*,* the quantity of categories of the target task *d*₂=2, $p = \left[\begin{matrix}{p}_{1} \\ {p}_{2} \\ {p}_{3}\end{matrix}\right]$, and **q** =[*q*₁ *q*₂].

In this case, the 1^{st} constraint condition W×**1** = **p** is: $\begin{matrix}W \times 1 = \left[\begin{matrix}{w}_{11} & {w}_{12} \\ {w}_{21} & {w}_{22} \\ {w}_{31} & {w}_{32}\end{matrix}\right] \times \left[\begin{matrix}1 \\ 1\end{matrix}\right] \\ = \left[\begin{matrix}{w}_{11} + {w}_{12} \\ {w}_{21} + {w}_{22} \\ {w}_{31} + {w}_{32}\end{matrix}\right] \\ = \left[\begin{matrix}{p}_{1} \\ {p}_{2} \\ {p}_{3}\end{matrix}\right]\end{matrix}$

To be specific, *p*₁ = *w*₁₁ + *w*₁₂, *p*₂ = *w*₂₁ + *w*₂₂, and *p*₃ = *w*₃₁ +*w*₃₂.

A meaning of the constraint condition W×**1** = **p** is as follows: A detection capability of the first AI model for each category of the source task continues to be used in the second AI model. In other words, knowledge that is learned from the first AI model and that is used to detect each category is migrated to the second AI model to a maximum extent based on a source distribution. For example, the first AI model has a strong capability of detecting a category A1 of the source task. If the constraint conditions are satisfied, when the first AI model is reused, category knowledge that is about the category A1 and that is learned by the first AI model may continue to be brought into full play in the target task.

In this case, the 2^{nd} constraint condition **1**× W=**q** is: $\begin{matrix}1 \times W = \left[1 1 1\right] \times \left[\begin{matrix}{w}_{11} & {w}_{12} \\ {w}_{21} & {w}_{22} \\ {w}_{31} & {w}_{32}\end{matrix}\right] \\ = \left[{w}_{11}+{w}_{21}+{w}_{31} {w}_{12}+{w}_{22}+{w}_{32}\right] \\ = \left[{q}_{1} {q}_{2}\right]\end{matrix}$

To be specific, *q*₁ = *w*₁₁ + *w*₂₁ + *w*₃₁ and *q*₂ = *w*₁₂ + *w*₂₂ + *w*₃₂.

It can be learned from the content of the foregoing embodiment that **q** is the uniform distribution, that is, *q*₁ = *q*₂ in the foregoing example. A meaning of the constraint condition **1**× W=**q** is as follows: After the first AI model is reused to the second AI model, detection effect of the second AI model on each category of the target task is as the same as possible, that is, the second AI model is expected to reach a level as good as possible in each category of the target task. For example, the target task includes two categories. An objective of the constraint conditions is to enable detection effect of the second AI model on the first category to be close to detection effect of the second AI model on the second category.

Optionally, for Formula (1), the model reuse weight W may be obtained through solving by using a sinkhorn algorithm. For a detailed process of solving by using the sinkhorn algorithm, refer to related information in the conventional technology. Details are not described herein.

S304: Obtain the second AI model based on the model reuse weight and the target training dataset.

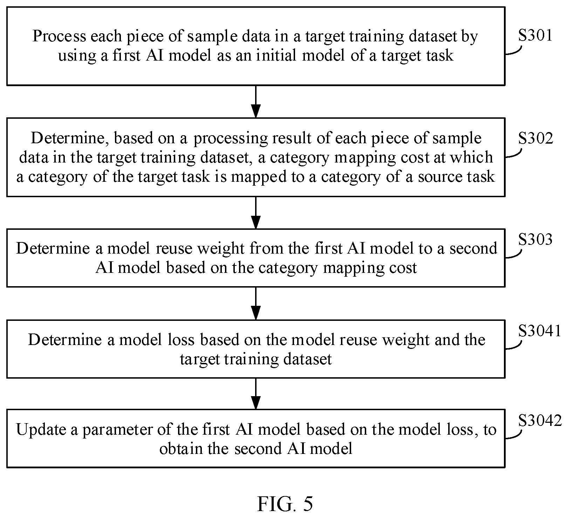

Optionally, with reference to FIG. 3, as shown in FIG. 5, S304 may be implemented through S3041 and S3042.

S3041: Determine a model loss based on the model reuse weight and the target training dataset.

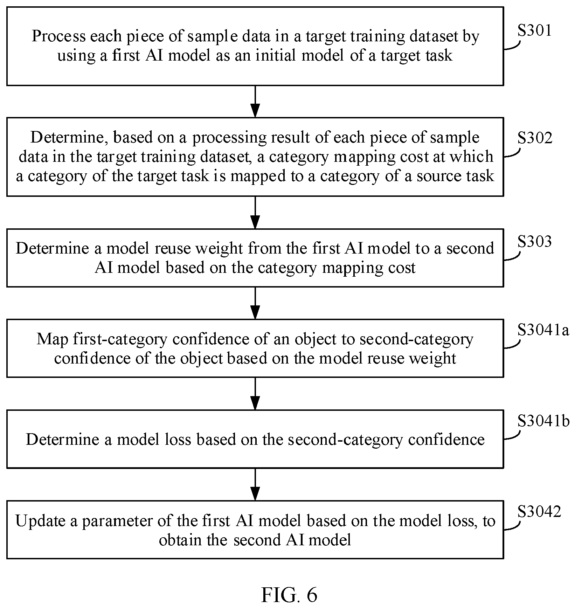

With reference to FIG. 5, as shown in FIG. 6, S3041 specifically includes S3041a and S3041b.

S3041a: Map first-category confidence of the object to second-category confidence of the object based on the model reuse weight.

The first-category confidence of the object is obtained by processing the sample data in the target training dataset by using the first AI model.

It may be understood that the category confidence output by the AI model is a vector, and the category confidence may also be referred to as a classification weight vector.

A specific process of mapping the first-category confidence of the object to the second-category confidence of the object is as follows: multiplying the first-category confidence of the object by the model reuse weight, to obtain the second-category confidence of the object, where the second-category confidence includes confidence at which the sample data is detected as each category of the target task, and the second-category confidence is an expected processing result of the second AI model obtained by reusing the current first AI model.

In this embodiment of this application, mapping the first-category confidence of the object to the second-category confidence of the object is a process of changing the processing result of the first AI model, and the process of changing the category confidence relates to category changing (namely, category mapping). To be specific, a category (a category in the source task) of an object in the sample data in the processing result is changed to an actual category of the object. For example, an object in the sample data is recognized by the first AI model as a category A1 (for example, a hamburger) in the source task, but actually, the object in the sample data is a category A2 (sandwich) in the target task. In this case, confidence Z₁ at which the object belongs to the category A1 in the processing result is changed to confidence Z₂ at which the object belongs to the category A2, where Z₂=Z₁x*w*, and *w* indicates the model reuse weight that is from the first AI model to the second AI model and at which the category of the target task is detected as the category of the source task.

S3041b: Determine the model loss based on the second-category confidence.

It may be understood that the second-category confidence of the object obtained in S3041b is an estimated processing result of the sample data based on the second AI model. Optionally, a value of a category loss function (namely, a category loss value) is determined based on the second-category confidence of the object and real category confidence (for example, 100%) of the object, and the category loss value is the model loss.

In some embodiments, in the object detection scenario, the processing result obtained by processing the sample data in the target training dataset by using the first AI model may further include the location information of the object, and the location information is an estimated processing result of the sample data based on the second AI model. In this case, the model loss may be a sum of a category loss and a location loss. The category loss is determined based on the second-category confidence of the object, and the location loss is determined based on the location information of the object. Optionally, a value of a location loss function (namely, a location loss value) is determined based on predicted location information of the object and real location information of the object in the sample data.

S3042: Update a parameter of the first AI model based on the model loss, to obtain the second AI model.

Optionally, gradient back propagation may be performed on the model loss by using an error back propagation (error back propagation, BP) algorithm, and then the parameter of the current first AI model is updated based on gradient information.

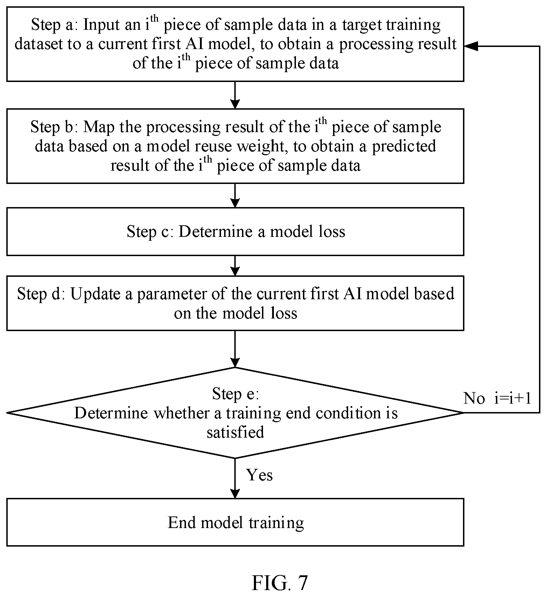

It should be understood that the first AI model is used as the initial model of the target task, and the first AI model is continuously updated by using the target training dataset, to obtain the second AI model. The process is a process of a plurality of iterations (a cyclic process). Refer to FIG. 7. The first AI model is used as the initial model. After the model reuse weight is obtained, a process of obtaining the second AI model based on the model reuse weight and the target training dataset includes the following step a to step e.

Step a: Input an i^{th} piece of sample data in the target training dataset to the current first AI model, to obtain a processing result of the i^{th} piece of sample data.

A value of i is one of 1, 2, ..., and M, M is an amount of sample data included in the target training dataset, and M is a positive integer greater than or equal to 1. When i=1, the current first AI model is the initial model selected from the model library.

The processing result of the i^{th} piece of sample data includes confidence of each object in the sample data obtained by processing the sample data by using the current first AI model. In the object detection scenario, the processing result further includes location information of each object.

Step b: Map the processing result of the i^{th} piece of sample data based on the model reuse weight, to obtain a predicted result of the i^{th} piece of sample data.

The predicted result is an estimated processing result of the sample data based on the second AI model.

Step c: Determine the model loss.

Step d: Update the parameter of the current first AI model based on the model loss.

For related content of step a to step d, refer to the descriptions in the foregoing embodiments. Details are not described herein again.

Step e: Determine whether a training end condition is satisfied.

Optionally, a quantity of times of model training may be set as the training end condition. Certainly, another condition may be used as the training end condition.

In this embodiment of this application, if the training end condition is satisfied, the first AI model whose parameter is updated in step e is used as the second AI model. If the training end condition is not satisfied, i(i=i+1) is updated. To be specific, a next round of training procedure is performed again from step a by using next sample data until the training end condition is satisfied, and the first AI model updated for the last time is used as the second AI model.

In conclusion, according to the AI model reuse method provided in this embodiment of this application, in a process of reusing the pre-trained model (source model), the category mapping cost at which the category of the source task is mapped to the category of the target task is introduced, the model reuse weight from the source model to the target model is further determined based on the category mapping cost, the model loss is determined based on the model reuse weight and the target training dataset, and the parameter of the source model is updated based on the model loss, to obtain the target model. In the method, the category mapping cost between the category of the source task and the category of the target task can reflect the reusability between the source model used to process the source task and the target model used to process the target task. Therefore, the category mapping cost is used as a consideration factor for model reuse, so that a feature of the pre-trained model can be better reused in a model training process, to obtain a target model with good processing effect. In other words, the method can improve model reuse effect.

Further, model reuse is performed based on the category mapping cost, so that the model training process can be guided to converge more quickly, and computational power overheads and time overheads can be reduced to some extent.

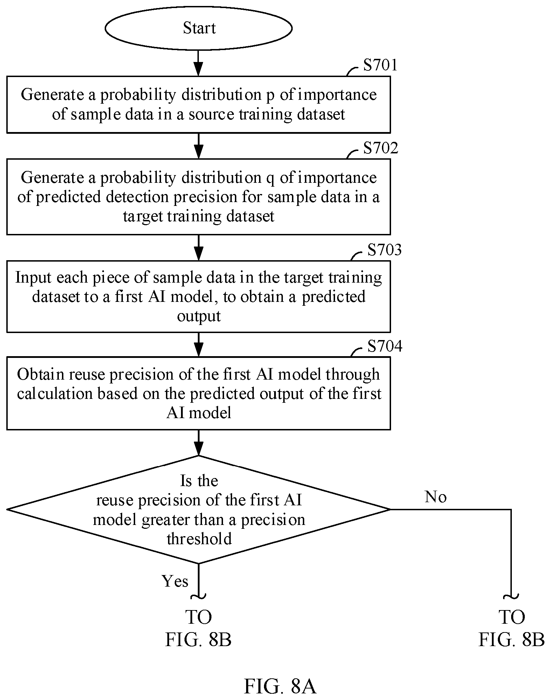

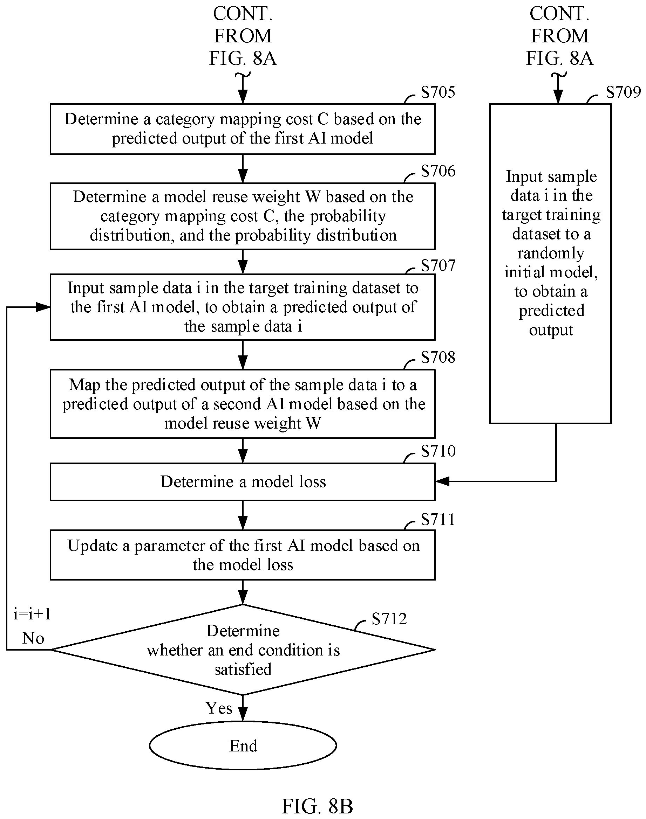

With reference to the foregoing content, as shown in FIG. 8A and FIG. 8B, the following describes a complete process of the AI model reuse method provided in embodiments of this application. The method includes the following steps.

S701: Collect statistics about a quantity of each category of sample data in a source training dataset, and generate a probability distribution **p** of importance of the sample data in the source training dataset.

S702: Generate a probability distribution **q** of importance of predicted detection precision for sample data in a target training dataset.

For detailed descriptions of S701 and S702, refer to the descriptions of S303 in the foregoing embodiment. Details are not described herein again.

S703: Input each piece of sample data in the target training dataset to a first AI model, to obtain a predicted output.

S704: Obtain reuse precision of the first AI model through calculation based on the predicted output of the first AI model.

The reuse precision of the first AI model is used to determine whether to use the first AI model as an initial model of a target task. The reuse precision of the first AI model is detection precision at which a category of the target task is detected as a category of a source task when the sample data in the target training dataset is processed by using the first AI model.

In an implementation, the reuse precision of the first AI model may be a sum of all elements in the precision matrix AP determined in S302. It is assumed that the reuse precision of the first AI model is denoted as Y. In this case, $Y = {\sum }_{i = 1 , j = 1}^{{d}_{1} , {d}_{2}} {a}_{ij}$.

It should be noted that, when the detection precision of the first AI model is greater than a precision threshold, the first AI model is used as the initial model of a second AI model, and steps S705 to S708 and steps after S710 continue to be performed. When the detection precision of the first AI model is less than or equal to the precision threshold, the first AI model is not used as the initial model of the second AI model. In this case, a randomly initial model may be used as the initial model of the second AI model, and the randomly initial model is trained based on the target training dataset, that is, step S709 and steps after S710 are performed.

The initial model of the second AI model is determined based on the detection precision. This helps obtain the second AI model with better performance.

S705: Determine a category mapping cost C based on the predicted output of the first AI model.

S706: Determine a model reuse weight W based on the category mapping cost C, the probability distribution **p,** and the probability distribution **q**.

S707: Input sample data i in the target training dataset to the first AI model, to obtain a predicted output of the sample data i.

S708: Map the predicted output of the sample data i to a predicted output of the second AI model based on the model reuse weight W.

S709: Input the sample data i in the target training dataset to the randomly initial model, to obtain a predicted output.

The randomly initial model may be a model obtained by randomly initializing a parameter of the first AI model, or may be another model. This is not limited in embodiments of this application.

S710: Determine a model loss.

S711: Update the parameter of the first AI based on the model loss.

S712: Determine whether an end condition is satisfied.

If the model training end condition is satisfied, the first AI model updated this time is used as the second AI model; or if the model training end condition is not satisfied, i(i=i+1) is updated, S707 continues to be performed until the end condition is satisfied, and the first AI model updated for the last time is used as the second AI model.

The second model with the good processing effect can be obtained by performing S701 to S712, and model training is performed based on the category mapping cost, so that a model training process can be guided to converge more quickly, and computational power overheads and time overheads can be reduced to some extent.

It may be understood that, to implement the foregoing functions, the compute device includes a corresponding hardware structure and/or software module for performing each function. A person skilled in the art should easily be aware that, in combination with methods and steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the compute device may be divided into functional modules based on the foregoing method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division, and may be other division in an actual implementation.

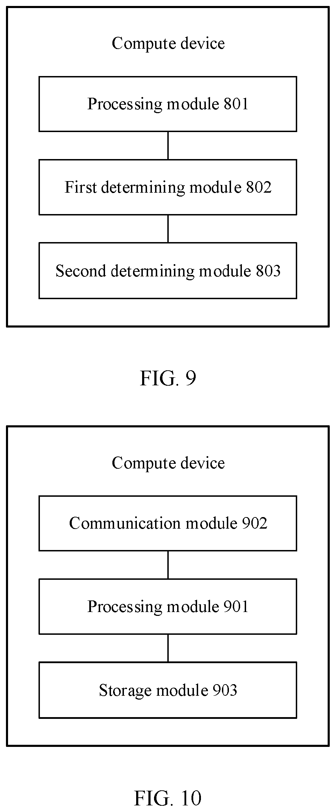

When each functional module is obtained through division based on each corresponding function, FIG. 9 is a diagram of a possible structure of the compute device in the foregoing embodiments. The compute device includes a processing module 801, a first determining module 802, and a second determining module 803.

The processing module 801 is configured to perform S301, S703, S707, S708, and S709 in the foregoing method embodiments. The first determining module 802 is configured to perform S302 (including S3021 and S3022), S303, S704, S705, and S706 in the foregoing method embodiments. The second determining module 803 is configured to perform S304 (including S3041 and S3042), S710, and S711 in the foregoing method embodiments.

When an integrated unit is used, FIG. 10 is a diagram of another possible structure of the compute device in the foregoing embodiments. The compute device includes a processing module 901 and a communication module 902. The processing module 901 may be configured to control and manage actions of the compute device. For example, the processing module 901 may be configured to support the compute device in performing the steps performed by the processing module 801, the first determining module 802, and the second determining module 803 in the foregoing method embodiments, and/or another process of the technology described in this specification. The communication module 902 may be configured to support communication between the compute device and another network entity. Optionally, as shown in FIG. 10, the compute device may further include a storage module 903, configured to store program code and data of the compute device.

The processing module 901 may be a processor. For example, the processor may be the general-purpose processor 201 and the heterogeneous processor 205 in FIG. 2. The communication module 902 may be a transceiver, a transceiver circuit, a communication interface, or the like, for example, the communication interface 203 in FIG. 2. The storage module 903 may be a memory, for example, the memory 202 in FIG. 2.

The modules of the compute device may be further configured to perform other actions in the foregoing method embodiments. All related content of each step in the foregoing method embodiments may be referenced to function descriptions of corresponding functional modules. Details are not described herein again.

For more details about implementing the foregoing functions by the modules included in the compute device, refer to the descriptions in the foregoing method embodiments. Details are not described herein again. Embodiments in this specification are all described in a progressive manner, for same or similar parts in embodiments, refer to these embodiments, and each embodiment focuses on a difference from other embodiments.

Optionally, an embodiment of this application further provides a compute apparatus (for example, the compute apparatus may be a chip or a chip system). The compute apparatus includes at least a processor (a general-purpose processor and/or a heterogeneous processor) and at least one interface. The interface may be configured to receive a signal from another apparatus (for example, a memory of another electronic device). For another example, the interface may be configured to send a signal to another apparatus (for example, a processor). The interface may read instructions stored in the memory, and send the instructions to the processor. The processor is configured to read the instructions to perform the method in any one of the foregoing method embodiments.

In a possible design, the compute apparatus further includes a memory. The memory is configured to store necessary program instructions and data. The processor may read, through an interface, the computer instructions stored in the memory, so that the compute apparatus performs the method in any one of the foregoing method embodiments. Certainly, the memory may not be in the compute apparatus. When the compute apparatus is a chip system, the compute apparatus may include a chip, or may include a chip and another discrete component. This is not specifically limited in embodiments of this application.

All or a part of the foregoing embodiments may be implemented by software, hardware, firmware, or any combination thereof. When a software program is used to implement embodiments, all or a part of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

The foregoing descriptions about implementations allow a person skilled in the art to clearly understand that, for the purpose of convenient and brief description, division into the functional modules is used as an example for description. In actual application, the foregoing functions may be allocated to different functional modules and implemented based on a requirement, that is, an inner structure of an apparatus is divided into different functional modules to implement all or a part of the functions described above. For a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separated, and components shown as units may or may not be physical units, to be specific, may be located in one place, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor to perform all or a part of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An artificial intelligence AI model reuse method, comprising:
processing each piece of sample data in a target training dataset by using a first AI model as an initial model of a target task, wherein the first AI model is an AI model obtained through training based on a source training dataset of a source task;
determining, based on a processing result of each piece of sample data in the target training dataset, a category mapping cost at which a category of the target task is mapped to a category of the source task;
determining a model reuse weight from the first AI model to a second AI model based on the category mapping cost, wherein the second AI model is used to process the target task; and
obtaining the second AI model based on the reuse weight and the target training dataset.

2. The method according to claim 1, wherein obtaining the second AI model based on the reuse weight and the target training dataset comprises:
determining a model loss based on the model reuse weight and the target training dataset; and
updating a parameter of the first AI model based on the model loss, to obtain the second AI model.

3. The method according to claim 1 or 2, wherein determining, based on the processing result of each piece of sample data in the target training dataset, the category mapping cost at which the category of the target task is mapped to the category of the source task comprises:
determining, based on category confidence of an object in each piece of sample data in the processing result, detection precision at which the category of the target task is detected as the category of the source task; and
determining, based on the detection precision, the category mapping cost at which the category of the target task is mapped to the category of the source task.

4. The method according to claim 3, wherein
the category mapping cost at which the category of the target task is mapped to the category of the source task is negatively correlated with the detection precision at which the category of the target task is detected as the category of the source task.

5. The method according to any one of claims 1 to 4, wherein
the model reuse weight is: $W = \left[\begin{matrix}{w}_{11} & … & {w}_{1 j} & … & {w}_{1 {d}_{2}} \\ … & … & … & … & … \\ {w}_{i 1} & … & {w}_{ij} & … & {w}_{3 {d}_{2}} \\ … & … & … & … & … \\ {w}_{{d}_{1} 1} & … & {w}_{{d}_{1} j} & … & {w}_{{d}_{1} {d}_{2}}\end{matrix}\right] ,$ wherein
*d*₁ indicates a quantity of categories of the source task, *d*₂ indicates a quantity of categories of the target task, *i* = 1, 2, ......, *d*₁*, j* = 1, 2, ......, *d*₂, and *wᵢⱼ* indicates a model reuse weight that is from the first AI model to the second AI model and at which a category *j* of the target task is detected as a category *i* of the source task; and
the model reuse weight W satisfies: $min {\sum }_{i = 1 , j = 1}^{{d}_{1} , {d}_{2}} {c}_{ij} {w}_{ij} ,$ wherein $s . t . W \times 1 = p , 1 \times W = q$
*cᵢⱼ* indicates a category mapping cost at which the category *j* of the target task is mapped to the category *i* of the source task, **p** indicates a probability distribution of importance of sample data to which each category of object belongs in the source training dataset, and **q** indicates a probability distribution of importance of expected detection precision that is for each category of the target task and that is obtained by using the second AI model.

6. The method according to any one of claims 1 to 5, wherein determining the model loss based on the model reuse weight and the target training dataset comprises:
mapping first-category confidence of the object to second-category confidence of the object based on the model reuse weight, wherein the first-category confidence of the object is obtained by processing the sample data in the target training dataset by using the first AI model; and
determining the model loss based on the second-category confidence.

7. The method according to any one of claims 1 to 6, wherein
the probability distribution of the importance of the expected detection precision that is for each category of the target task and that is obtained by using the second AI model is a uniform distribution.

8. The method according to any one of claims 1 to 7, wherein the method further comprises:
determining reuse precision of the first AI model, wherein the reuse precision of the first AI model is used to determine whether to use the first AI model as the initial model of the target task, and the reuse precision of the first AI model is the detection precision at which the category of the target task is detected as the category of the source task when the target training dataset is processed by using the first AI model.

9. A compute device, comprising a processing module, a first determining module, and a second determining module, wherein
the processing module is configured to: process each piece of sample data in a target training dataset by using a first AI model as an initial model of a target task, wherein the first AI model is an AI model obtained through training based on a source training dataset of a source task;
the first determining module is configured to determine, based on a processing result of each piece of sample data in the target training dataset, a category mapping cost at which a category of the target task is mapped to a category of the source task;
the first determining module is further configured to determine a model reuse weight from the first AI model to a second AI model based on the category mapping cost, wherein the second AI model is used to process the target task; and
the second determining module is configured to obtain the second AI model based on the reuse weight and the target training dataset.

10. The compute device according to claim 9, wherein
the second determining module is specifically configured to: determine a model loss based on the model reuse weight and the target training dataset; and update a parameter of the first AI model based on the model loss, to obtain the second AI model.

11. The compute device according to claim 9 or 10, wherein
the first determining module is specifically configured to: determine, based on category confidence of an object in each piece of sample data in the processing result, detection precision at which the category of the target task is detected as the category of the source task; and determine, based on the detection precision, the category mapping cost at which the category of the target task is mapped to the category of the source task.

12. The compute device according to claim 11, wherein
the category mapping cost at which the category of the target task is mapped to the category of the source task is negatively correlated with the detection precision at which the category of the target task is detected as the category of the source task.

13. The compute device according to any one of claims 9 to 12, wherein
the model reuse weight is: $W = \left[\begin{matrix}{w}_{11} & … & {w}_{1 j} & … & {w}_{1 {d}_{2}} \\ … & … & … & … & … \\ {w}_{i 1} & … & {w}_{ij} & … & {w}_{3 {d}_{2}} \\ … & … & … & … & … \\ {w}_{{d}_{1} 1} & … & {w}_{{d}_{1} j} & … & {w}_{{d}_{1} {d}_{2}}\end{matrix}\right] ,$ wherein
*d*₁ indicates a quantity of categories of the source task, *d*₂ indicates a quantity of categories of the target task, *i* = 1, 2, ......, *d*₁*, j* = 1, 2, ......, *d*₂, and *wᵢⱼ* indicates a model reuse weight that is from the first AI model to the second AI model and at which a category *j* of the target task is detected as a category *i* of the source task; and
the model reuse weight W satisfies: $min {\sum }_{i = 1 , j = 1}^{{d}_{1} , {d}_{2}} {c}_{ij} {w}_{ij} ,$ wherein $s . t . W \times 1 = p , 1 \times W = q$
*cᵢⱼ* indicates a category mapping cost at which the category *j* of the target task is mapped to the category *i* of the source task, **p** indicates a probability distribution of importance of sample data to which each category of object belongs in the source training dataset, and **q** indicates a probability distribution of importance of expected detection precision that is for each category of the target task and that is obtained by using the second AI model.

14. The compute device according to any one of claims 9 to 13, wherein
the second determining module is specifically configured to: map first-category confidence of the object to second-category confidence of the object based on the model reuse weight, wherein the first-category confidence of the object is obtained by processing the sample data in the target training dataset by using the first AI model; and determine the model loss based on the second-category confidence.

15. The compute device according to any one of claims 9 to 14, wherein
the probability distribution of the importance of the expected detection precision that is for each category of the target task and that is obtained by using the second AI model is a uniform distribution.

16. The compute device according to any one of claims 9 to 15, wherein
the first determining module is further configured to determine reuse precision of the first AI model, wherein the reuse precision of the first AI model is used to determine whether to use the first AI model as the initial model of the target task, and the reuse precision of the first AI model is the detection precision at which the category of the target task is detected as the category of the source task when the target training dataset is processed by using the first AI model.

17. A compute device, comprising a memory and at least one processor connected to the memory, wherein the memory is configured to store computer program code, the computer program code comprises computer instructions, and when the computer instructions are executed by the at least one processor, the processor is enabled to perform the method according to any one of claims 1 to 8.

18. A computer-readable storage medium, storing computer instructions, wherein when the computer instructions are run on a computer, the method according to any one of claims 1 to 8 is performed.

19. A chip, comprising a processor, a memory, and an interface, wherein the processor is configured to: read, through the interface, computer instructions stored in the memory, and run the computer instructions to perform the method according to any one of claims 1 to 8.
